# EUROPÄISCHE PATENTSCHRIFT

(11) **EP 3 415 801 B1**
(45) Veröffentlichungstag und Bekanntmachung des Hinweises auf die Patenterteilung: **30.09.2020**
(21) Anmeldenummer: 18176291.5
(22) Anmeldetag: 06.06.2018
(51) Int. Cl.: F16L 39/00, F23J 13/02, F23J 13/04, F24B 1/18, E04F 17/02

(54) **FEUERSTÄTTE UMFASSEND EINE ANSCHLUSSVORRICHTUNG UND EIN VERFAHREN ZUM VERBINDEN EINES DOPPELROHRS MIT EINER FEUERSTÄTTE**
FIREPLACE COMPRISING A CONNECTION DEVICE AND METHOD OF CONNECTING A DOUBLE WALLED TUBE WITH A FIREPLACE
FOYER COMPRENANT UN DISPOSITIF DE RACCORDEMENT ET PROCÉDÉ DE RACCORDEMENT D'UN DOUBLE TUBE À UN FOYER

(30) Priorität: 12.06.2017 DE 102017112874
(43) Veröffentlichungstag der Anmeldung: 19.12.2018
(73) Patentinhaber: Schiedel GmbH, 4542 Nussbach (AT)
(72) Erfinder: Elfert, Thomas, 04668 Leipnitz (DE); Pühringer, Herbert, 4542 Nussbach (AT)
(74) Vertreter: Müller Schupfner & Partner Patent- und Rechtsanwaltspartnerschaft mbB

(56) Entgegenhaltungen:
- EP-A1- 2 530 380
- AU-B2- 570 237
- DE-A1-102009 052 674
- DE-U1-202013 009 129
- US-A- 2 650 112
- US-A1- 2005 000 510
- US-A1- 2016 053 994

## Beschreibung

Die vorliegende Erfindung betrifft eine Feuerstätte ein Verfahren zum Verbinden eines Doppelrohrs mit einer Feuerstätte.

Aus der EP 1 437 550 ist eine Einrichtung zum Betrieb einer Feuerstätte für den häuslichen Gebrauch bekannt, bei welcher die Feuerstätten bei dem Hersteller des Schornsteins in den Schornstein integriert werden und in einem einzigen Arbeitsgang in das Haus installiert werden. Nach der Installation des Schornsteins werden Rohrleitungen montiert, die zur Abgasableitung und Zuführung von Frischluft, d. h. einer Zuluft, vorgesehen sind. Als besonders bauraumökonomisch haben sich hierbei Doppelrohrsysteme, die ein Außenrohrelement und ein innerhalb des Außenrohrelements integriertes Innenrohrelement aufweisen, herausgestellt. Sofern es sich bei der Feuerstätte um eine gasbetriebene Feuerstätte handelt, werden allerdings vergleichsweise hohe Anforderungen an eine Dichtigkeit des Rohleitungssystems gestellt. Als besonders kritisch haben sich dabei die Schnittstellenbereiche zwischen der Feuerstätte und dem Doppelrohrsystem bzw. dem Doppelrohrsystem und einem weiteren Rohrelement, das sich an das Doppelrohrsystem anschließen soll, herausgestellt.

Aus der DE 10 2009 52 674 A1 ist ein Verfahren zum Verbinden von Doppelmantelrohren bekannt, die jeweils ein Innenrohr und ein Mantelrohr umfassen, mittels einer Vorrichtung zum Verbinden von Doppelmantelrohren mit zwei Festflanschen und einem Sicherungselement zum axialen und drehbaren Verbinden der Festflansche. Dabei weisen diese Festflansche jeweils einen Innenring und einen drehfest mit dem Innenring verbundenen Außenring auf und zwischen dem Innenring und dem Außenring jeweils mindestens eine durch einen Ringraum voneinander beabstandete Axialbohrung auf.

Die EP 2 530 380 A1 betrifft eine Heizanlage, die ein Holzheizgerät vom Typ eines Ofens mit einem Verbrennungsraum aufweist sowie einen Gebäudeauslass und eine Verbindungsleitung. Dabei weist die Leitung ein zentrales Rohr und ein umgebendes Rohr, in dessen Innerem wiederum das zentrale Rohr angeordnet ist. Aus der AU 2510684 ist ein Doppelrohrsystem offenbart, bei dem einzelne Rohre in einem Schnittstellen ineinander gesteckt werden, indem das eine Rohr in den Zwischenraum des anderen Rohres eingeführt wird. Dabei weisen beide Rohre im Zwischenraum stirnseitig Öffnungen auf.

Aus der US 2650 112 und der US 2016 0053994 A1 ist jeweils ein Adapterelement für das Zusammensetzen zweier Doppelrohre bekannt. Dabei weist eine axial verlaufende Fläche des Adapterelements, die im verbauten Zustand zwischen dem Innenrohr und dem Außenrohr angeordnet ist, Öffnungen auf.

Aus der US 2005000510 ist ein Abschluss bzw. Adapterelement bekannt, bei dem einzelne Streben das Innenrohr vom Außenrohr beabstanden.

Die DE 20 2013 009 129 U1 betrifft eine Kanalsektion zur Anordnung in einem Rauchabzug für den Anschluss an den Verbrennungsraum eines Kaminofens vorgesehen ist.

Es ist somit eine Aufgabe der vorliegenden Erfindung, eine Feuerstätte umfassend eine Anschlussvorrichtung bereitzustellen, mit der eine ausreichende Dichtigkeit für das Abführen von Abgas sichergestellt werden kann und die sich vergleichsweise einfach montieren lässt.

Diese Aufgabe wird gelöst durch eine Feuerstätte gemäß Anspruch 1, und durch ein Verfahren zum Verbinden eines Doppelrohrs mit einer Feuerstätte gemäß Anspruch 15. Weitere Vorteile und Merkmale der Erfindung ergeben sich aus den Unteransprüchen sowie der Beschreibung und den beigefügten Figuren.

Erfindungsgemäß ist eine Feuerstätte umfassend eine Anschlussvorrichtung für ein Doppelrohrsystem, das ein Außenrohrelement und ein innerhalb des Außenrohrelements angeordnetes Innenrohrelement aufweist, vorgesehen, insbesondere für einen ersten Schnittstellenbereich zwischen einer Feuerstätte und dem Doppelrohrsystem oder einen zweiten Schnittstellenbereich zwischen dem Doppelrohrsystem und einem weiteren Rohrelement, umfassend:
- einen Grundkörper,
- ein an den Grundkörper angrenzendes Scheibenelement,
- einen, insbesondere vom Scheibenelement bereitgestellten, Innenkantenbereich und
- einen, insbesondere vom Scheibenelement bereitgestellten, Außenkantenbereich,
wobei zwischen dem Innenkantenbereich und dem Außenkantenbereich eine oder mehrere Aussparungen angeordnet sind,
wobei
-- der Außenkantenbereich zur Anbindung eines ersten Hülsenelements, das an das Außenrohrelement anbindbar ist, und
-- der Innenkantenbereich zur Anbindung eines zweiten Hülsenelements, das an das Innenrohrelement anbindbar ist,
vorgesehen ist. Gegenüber dem Stand der Technik lässt sich mittels des erfindungsgemäßen Scheibenelements die Ausrichtung bzw. Positionierung des zweiten Hülsenelements bzw. des Innenrohrelements bei der Montage unkompliziert stabilisieren, da über das Scheibenelement das zweite Hülsenelement relativ zum ersten Hülsenelement justiert und verbunden wird. Dabei lässt sich das Scheibenelement vorzugsweise so ausgestalten bzw. konfigurieren, dass der erste Schnittstellenbereich bzw. der zweite Schnittstellenbereich abgedichtet sind. Vorzugsweise handelt es sich um eine Anschlussvorrichtung, die in einem Korpus verwendet wird, wobei der Korpus durch mehrere Wände seitlich begrenzt ist und einen Hohlraum bildet, in dem die Feuerstätte integriert ist, bevor der Korpus samt Feuerstätte in einem Haus montiert wird. Insbesondere wird der Korpus an seiner im montierten Zustand oberen Seite mit einer tragenden Zwischenplatte abgeschlossen, auf dem ein weiterer Korpus zur Zusammensetzung eines Schornsteins aufsetzbar ist. Insbesondere ist der Grundkörper der Anschlussvorrichtung zylinder- bzw. kreiszylinderförmig ausgestaltet. Dabei wird der Innenkantenbereich durch das Scheibenelement bereitgestellt. Es ist auch vorstellbar, dass das Scheibenelement, insbesondere in Form eines Ringscheibenelements, an seiner Innenseite einen Fortsatz, beispielsweise ein sich axial erstreckendes, hülsenförmiges Bauteil aufweist, wobei der Fortsatz den Innenkantenbereich bereitstellt. Vorzugsweise ist das zweite Hülsenelement im montierten Zustand demnach unmittelbar oder mittelbar über den Fortsatz an das Scheibenelement angebunden. Der Außenkantenbereich und der Innenkantenbereich sind bei der unmittelbaren Anbindung in radialer Richtungen gesehen, ringscheibenförmigen Außen- und Innenbereiche des Scheibenelements, zwischen denen eine oder mehrere Aussparung zur Führung der Luft zwischen dem ersten und dem zweiten Hülsenelement vorgesehen sind. Bezogen auf eine mittig durch den Grundkörper verlaufende Zentralachse, zu der der zylinderförmige Grundkörper vollständig rotationssymmetrisch ist, wird der Außenkantenbereich des Scheibenelements durch den sich in radialer Richtung gesehen hinter den Aussparungen liegenden Bereich und der Innenkantenbereich durch den in radialer Richtung gesehen vor den Aussparungen liegenden Bereich zweckmäßigerweise festgelegt. Weiterhin ist es vorteilhaft, dass mittels der Anschlussvorrichtung darauf verzichtet werden kann, das Außenrohr und das Innenrohr unmittelbar an die Feuerstätte festzulegen. Stattdessen ist es mit Vorteil möglich, beispielsweise durch die Anbindung des ersten Hülsenelements an das Außenrohrelement und durch die Anbindung des zweiten Hülsenelements an das Innenrohelement die Montage zu vereinfachen, da die zahlreichen Anbindungsmöglichkeiten jeweils Korrekturmaßnahmen, bspw. hinsichtlich der Länge des Innenrohrelements und des Außenrohrelements, zulassen. Weiterhin ist es vorgesehen, dass sich der Grundkörper im montierten Zustand an der dem Doppelrohrsystem abgewandten Seite an das Scheibenelement anschließt. Insbesondere ist der Grundkörper am Außenkantenbereich des Scheibenelements angebracht. Sofern die Anschlussvorrichtung im ersten Schnittstellenbereich angebracht werden soll, trägt der Grundkörper zur Beabstandung von der Feuerstätte bei, wodurch dem Monteur bei der Montage mehr Bewegungsfreiheit zugestanden wird, was mit Vorteil das Anbinden der Abschlussvorrichtung weiter vereinfacht. Sofern die Anschlussvorrichtung zur Anbindung an ein weiteres Rohrelement vorgesehen ist, lässt sich der Grundkörper zur Führung bzw. seitlichen Fixierung des inneren Rohrelements, das angeschlossen werden soll, nutzen. Vorstellbar ist auch, dass Teile der Anschlussvorrichtung bereits vormontiert sind, beispielweise bereits an die Feuerstätte im Korpus vormontiert oder in die Zwischenplatte integriert sind, wenn der Korpus im Haus platziert wird. Dadurch wird die Zahl der Arbeitsschritte an der Baustelle mit Vorteil weiter reduziert. Grundsätzlich sind das erste Hülsenelement und das zweite Hülsenelement an ihren Stirnseiten offen, um einen Transport des Gases zu gewährleisten.

Gemäß einer weiteren Ausführungsform der vorliegenden Erfindung ist es vorgesehen, dass die Anschlussvorrichtung den ersten Schnittstellenbereich zwischen der Feuerstätte und dem Doppelrohrsystem oder den zweiten Schnittstellenbereich zwischen dem Doppelrohrsystem und dem weiteren Rohrelement, vorzugsweise einem Keramik umfassenden weiteren Rohrelement, abdichtet, insbesondere bis zu einem Druck von 50 Pa, bevorzugt bis zu einem Druck von 80 Pa und besonders bevorzugt bis zu einem Druck von 100 Pa. Dadurch lässt sich die Anschlussvorrichtung mit Vorteil für gasbetriebene Feuerstätten nutzen, die vergleichsweise hohen Anforderungen an die Dichtigkeit genügen müssen.

Zweckmäßig ist es vorgesehen, dass das Scheibenelement einen Kragen an einem zylinderförmigen Grundkörper ausbildet. Insbesondere steht der Kragen im Wesentlichen senkrecht von einer den Grundkörper bildenden Wand ab. Vorzugsweise schließt sich der Kragen an einen Rand des zylinderförmigen Grundkörpers, d. h. an dessen Stirnseite, an. Dabei ist der Kragen auf der dem Doppelrohrsystem zugewandten Seite des Grundkörpers angeordnet. Ferner ist es vorgesehen, dass ein Innenkantenradius, der dem Scheibenelement zugeordnet ist, kleiner ist als der Innendurchmesser des zylinderförmigen Grundkörpers, und das ein Außenkantenradius, der dem Scheibenelement zugeordnet ist, größer ist als der Außendurchmesser des zylinderförmigen Grundkörpers. Damit erstreckt sich das Scheibenelement in radialer Richtung gesehen über den Rand des zylinderförmigen Grundkörpers hinweg.

In einer weiteren Ausführungsform der vorliegenden Erfindung ist es vorgesehen, dass der Innenkantenbereich konzentrisch zum Außenkantenbereich verläuft. Insbesondere verläuft die Innenkante konzentrisch zur Zentralachse. Dadurch lässt sich das zweite Hülsenelement mit Vorteil konzentrisch zum ersten Hülsenelement anordnen, wodurch automatisch auch eine konzentrische Ausrichtung des Innenrohrelements gegenüber dem Außenrohrelement im ersten bzw. zweiten Schnittstellenbereich erfolgt.

Vorteilhafterweise ist es vorgesehen, dass die Aussparungen gitterförmig ausgestaltet sind. Durch die Ausbildung der Aussparungen im Scheibenelement wird mit Vorteil gewährleistet, dass Luft in einem Zwischenraum bzw. Spaltbereich zwischen dem ersten Hülsenelement und dem zweiten Hülsenelement geführt werden kann. Dabei ist es vorzugsweise vorgesehen, dass zwischen den Aussparungen Stegelemente radial verlaufen, die dem Scheibenelement eine ausreichende Stabilität verleihen, damit das zweite Hülsenelement durch das Scheibenelement justiert bzw. ausgerichtet und stabilisiert werden kann. Vorstellbar ist auch, dass die Aussparungen Teil eines formstabilen Gitters sind oder in die Aussparungen zur Erhöhung der Stabilität Gitter eingelassen sind.

Zweckmäßig ist es vorgesehen, dass das Scheibenelement im Innenkantenbereich eine Auflagefläche zum Anschluss eines weiteren Rohrelements, insbesondere eines Keramikrohrs, umfasst. Insbesondere handelt es sich um eine Anschlussvorrichtung für den zweiten Schnittstellenbereich. Dabei wird die Auflagefläche vorzugsweise durch einen vergrößerten Innenkantenbereich, d. h. eine Verlängerung des Scheibenelements zur Zentrahlachse hin, realisiert. Der Innenkantenradius des Scheibenelements ist vorteilhafterweise kleiner als oder gleich groß wie der Innenradius eines Rohrelements, das an das Innenrohrelement des Doppelrohrsystems angeschlossen werden soll. Durch diese Dimensionierung kann das anzuschließende Rohrelement auf der Auflagefläche aufliegen. Vorzugsweise ist die Auflagefläche tragend ausgestaltet, beispielsweise indem das Scheibenelement im Bereich der Auflagefläche eine Materialverstärkung aufweist.

Erfindungsgemäß ist es vorgesehen, dass das erste Hülsenelement mittels einer Spannvorrichtung, insbesondere eines Spannrings, einer Rohrschelle oder eines Klemmrings, an dem Scheibenelement festlegbar ist. Mittels des Spannrings lässt sich mit Vorteil das erste Hülsenelement fixieren, wobei über das Scheibenelement zugleich die Fixierung des zweiten Hülsenelements erfolgt. Vorzugsweise ist die Spannvorrichtung derart ausgestaltet, dass sie im montierten Zustand das Scheibenelement und einen scheibenelementseitigen Flansch am ersten Hülsenelement ummantelt bzw. umschließt. Hierzu ist die Spannvorrichtung zumindest bereichsweise U-förmig ausgestaltet, um das Scheibenelement und den Flansch gemeinsam aufzunehmen. Vorstellbar ist auch, dass die Spannvorrichtung einen Schnellspannverschluss umfasst, um das Anbringen der Spannvorrichtung weiter zu vereinfachen.

Zweckmäßig ist es vorgesehen, dass ein erstes Dichtelement zur Anordnung zwischen dem ersten Hülsenelement und dem Außenkantenbereich und/oder ein zweites Dichtelement zur Anordnung zwischen dem zweiten Hülsenelement und dem Innenkantenbereich vorgesehen ist. Mittels dem ersten Dichtelement und dem zweiten Dichtelement lässt sich mit Vorteil die gewünschte Abdichtung realisieren. Vorzugsweise ist das erste Dichtelement mittels des Spannrings verklemmt, um so für die ausreichende Abdichtung zu sorgen. Weiterhin ist es vorzugsweise vorgesehen, dass das erste Dichtelement und/oder das zweite Dichtelement Flachdichtungen sind, d. h. Dichtungen, die beispielsweise eine ringscheibenförmige Form aufweisen. Vorstellbar ist auch, dass sich das erste Dichtelement und/oder das zweite Dichtelement in dafür vorgesehene Rücksprünge im Scheibenelement einsetzen oder vormontieren lässt. Weiterhin ist es vorstellbar, dass das erste Dichtelement und/oder das zweite Dichtelement eine Dichtmasse umfasst.

Vorteilhafterweise weist das erste Hülsenelement und/oder das zweite Hülsenelement zumindest bereichsweise ein Gewinde zur jeweiligen Anbindung des Außenrohrelements und/oder des Innenrohrelements auf. Hierdurch lassen sich vorteilhafterweise die jeweilige relative Lage des jeweiligen Hülsenelements zu dem Außen- bzw. Innenrohrelement variabel einstellen.

Weiterhin vorzugsweise ist es vorgesehen, dass das zweite Hülsenelement derart ausgestaltet ist, dass das zweite Hülsenelement im montierten Zustand durch den Grundkörper zur Anbindung an eine Abgasöffnung in der Feuerstätte, insbesondere zum Einstecken in eine Abgasöffnung in der Feuerstätte, hindurchgreift oder eingreift. Beispielsweise ist die Abgasöffnung in der Feuerstätte kreisrund und das zweite Hülsenelement lässt sich möglichst passgenau in diese Abgasöffnung einschieben. Dabei kann die Schnittstelle zwischen der Abgasöffnung und dem zweiten Hülsenelement innerhalb des Grundkörpers liegen, so dass es ausreicht, wenn das zweite Hülsenelement in den Grundkörper eingreift. Dadurch wird das zweite Hülsenelement mit seinem im montierten Zustand unteren Ende in der Abgasöffnung und mit dem oberen Ende durch einen Aufnahmebereich, der vom Scheibenelement, insbesondere von der Innenkante des Scheibenelements, begrenzt ist, fixiert.

Vorteilhafterweise ist es vorgesehen, dass der Grundkörper auf der dem Scheibenelement gegenüberliegenden Seite einen Flansch zur Anbindung an die Feuerstätte oder an einen Anschlusskasten der Feuerstätte aufweist. Dadurch lässt sich der Grundkörper auf einfacher Weise mit der Oberseite der Feuerstätte kraft-, form- oder stoffschlüssig verbinden. Dieser Schritt erfolgt vorzugsweise zeitlich vor der Anbindung des ersten Hülsenelements an dem Scheibenelement.

Zweckmäßig ist es vorgesehen, dass eine Messvorrichtung in den Grundkörper integriert ist oder der Grundkörper einen Anschlussbereich für eine Messeinrichtung aufweist, wobei die Messvorrichtung vorzugsweise im montierten Zustand durch den Grundköper und das zweite Hülsenelement durchgreift. Dadurch lässt sich der Grundkörper mit Vorteil zur Anordnung von Messegeräten nutzen. Durch das Hindurchgreifen durch eine Seitenwand des zweiten Hülsenelements ist es in vorteilhafter Weise möglich, das vom zweiten Hülsenelement geführte Abgas zu untersuchen. Beispielsweise handelt es sich bei Messvorrichtung um eine Abgastemperaturmessvorrichtung oder ein elektrisches Meldesystem. Durch die Anordnung im ersten Schnittstellenbereich ist die Messvorrichtung mit Vorteil in der Nähe der Feuerstätte angeordnet, d. h. in einem Bereich in dem sie vergleichsweise einfach zugänglich sind.

Erfindungsgemäß ist ebenfalls ein System aus einer Zwischenplatte und einer Anschlussvorrichtung für ein Doppelrohrsystem, das ein Außenrohrelement und ein innerhalb des Außenrohrelements angeordnetes Innenrohrelement aufweist, vorgesehen, insbesondere für einen Schnittstellenbereich zwischen einer Feuerstätte und dem Doppelrohrsystem oder zwischen dem Doppelrohrsystem und einem weiteren Rohrelement, umfassend:
- einen Grundkörper,
- ein an den Grundkörper angrenzendes Scheibenelement,
- einen, insbesondere vom Scheibenelement bereitgestellten, Innenkantenbereich und
- einen, insbesondere vom Scheibenelement bereitgestellten, Außenkantenbereich, wobei zwischen dem Innenkantenbereich und dem Außenkantenbereich eine oder mehrere Aussparungen angeordnet sind, wobei
der Außenkantenbereich zur Anbindung eines ersten Hülsenelements, das an das Außenrohrelement anbindbar ist, und
der Innenkantenbereich zur Anbindung eines zweiten Hülsenelements, das an das Innenrohrelement anbindbar ist, vorgesehen ist, wobei die Anschlussvorrichtung in einer Aussparung der Zwischenplatte einsetzbar bzw. eingesetzt ist. Alle für die erfindungsgemäße Anschlussvorrichtung beschriebenen Merkmale und deren Vorteile lassen sich sinngemäß ebenfalls auf das erfindungsgemäße System aus Anschlussvorrichtung und Zwischenplatte übertragen und andersherum.

Erfindungsgemäß ist ebenfalls eine Vorrichtung zum Betrieb einer Feuerstätte, insbesondere in Form eines hohlen Kubus, umfassend ein Doppelrohrsystem und eine Anschlussvorrichtung für ein Doppelrohrsystem, das ein Außenrohrelement und ein innerhalb des Außenrohrelements angeordnetes Innenrohrelement aufweist, vorgesehen, insbesondere für einen Schnittstellenbereich zwischen einer Feuerstätte und dem Doppelrohrsystem oder zwischen dem Doppelrohrsystem und einem weiteren Rohrelement, umfassend:
- einen Grundkörper,
- ein an den Grundkörper angrenzendes Scheibenelement,
- einen, insbesondere vom Scheibenelement bereitgestellten, Innenkantenbereich und
- einen, insbesondere vom Scheibenelement bereitgestellten, Außenkantenbereich,
wobei zwischen dem Innenkantenbereich und dem Außenkantenbereich eine oder mehrere Aussparungen angeordnet sind,
wobei
-- der Außenkantenbereich zur Anbindung eines ersten Hülsenelements, das an das Außenrohrelement anbindbar ist, und
-- der Innenkantenbereich zur Anbindung eines zweiten Hülsenelements, das an das Innenrohrelement anbindbar ist,
vorgesehen ist. Alle für die erfindungsgemäße Anschlussvorrichtung beschriebenen Merkmale und deren Vorteile lassen sich sinngemäß ebenfalls auf die erfindungsgemäße Vorrichtung zum Betrieb eine Feuerstätte übertragen und andersherum.

Verfahren zum Verbinden eines Doppelrohrs mit einer Feuerstätte mittels einer Anschlussvorrichtung, die einen zylinderförmiger Grundkörper und ein an den zylinderförmigen Grundkörper angrenzendes Scheibenelement umfasst, wobei zwischen einem Innenkantenbereich und einem Außenkantenbereich eine oder mehrere Aussparungen angeordnet sind, wobei der Außenkantenbereich zur Anbindung eines ersten Hülsenelements, das an das Außenrohrelement anbindbar ist, und der Innenkantenbereich zur Anbindung eines zweiten Hülsenelements, das an das Innenrohrelement anbindbar ist, vorgesehen ist, umfassend die Schritte:
Anbinden des ersten Hülsenelements an das Außenrohrelement,
Anbinden des zweiten Hülsenelements an das Innenrohrelement,
Verbinden des ersten Hülsenelements mit dem Außenkantenbereich des Scheibenelements und
Verbinden des zweiten Hülsenelements mit dem Innenkantenbereich, insbesondere dem Innenkantenbereich des Scheibenelements. Alle für die erfindungsgemäße Anschlussvorrichtung beschriebenen Merkmale und deren Vorteile lassen sich sinngemäß ebenfalls auf das erfindungsgemäße Verfahren übertragen und andersherum.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden.

Es zeigt:
- **Fig. 1**: Vorrichtung zum Betrieb einer Feuerstätte gemäß einer bevorzugten Ausführungsform der vorliegende Erfindung,
- **Fig.2**: Anschlussvorrichtung gemäß einer ersten bevorzugten Ausführungsform der vorliegenden Erfindung in einem zusammengesetzten Zustand,
- **Fig.3**: Anschlussvorrichtung gemäß der ersten bevorzugten Ausführungsform der vorliegenden Erfindung in einer Explosionsdarstellung,
- **Fig. 4.**: Anschlussvorrichtung gemäß der ersten bevorzugten Ausführungsform der vorliegenden Erfindung in einem verbauten Zustand und
- **Fig. 5**: Anschlussvorrichtung gemäß einer zweiten bevorzugten Ausführungsform der vorliegenden Erfindung.

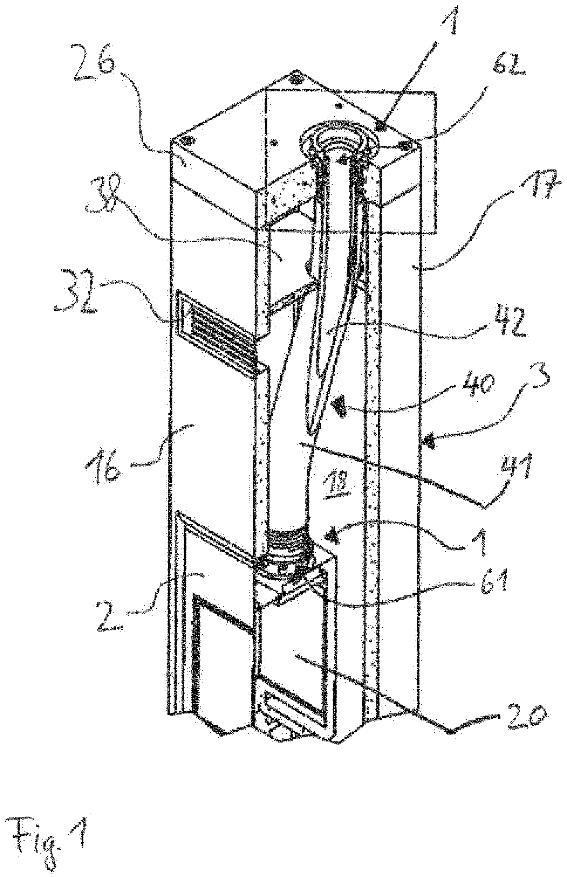

In **Figur 1** ist eine Vorrichtung zum Betrieb einer Feuerstätte gemäß einer bevorzugten Ausführungsform der vorliegenden Erfindung dargestellt. Hierbei ist die Feuerstätte in einem Mantel oder Korpus 3 aufgenommen. Der Korpus 3 wird durch Seitenwände 17 und eine vordere Wandfläche 16 so konstituiert, dass der Korpus 3 einen Hohlraum 18 ausbildet, in dem ein Brennraum 20 mit einer Klappe bzw. Brennraumtür 2aufgenommen ist. Der Korpus 3 ist vorzugsweise aus Beton, Stein oder sonstigem tragfähigen Material ausgebildet. Vorstellbar ist dabei, dass die Feuerstätte in dem Korpus 3 von einem (nicht dargestellten) Trägergestell gestützt wird. Vorzugsweise ist es vorgesehen, dass der Korpus 3 dazu ausgelegt ist, zusammen mit der in den Korpus 3 integrierten Feuerstätte als geschosshohes Schornsteinbauteil verbaut zu werden, indem dieser beispielsweise mittels eines Krans in einen dafür vorgesehenen Schacht eines Hauses eingelassen bzw. eingeführt wird.

Insbesondere handelt es sich bei der Feuerstätte um eine gasbetriebene Feuerstätte, an die besondere Anforderungen an die Luftzufuhr und Abgasabfuhr gestellt werden. Zur Luftzufuhr und Gasabfuhr ist vorzugsweise ein Doppelrohrsystem 40 vorgesehen, wobei das Doppelrohrsystem 40 ein Außenrohrelement 41 und ein im Außenrohrelement 41 angeordnetes, insbesondere konzentrisch angeordnetes Innenrohrelement 42, umfasst. Mittels des Innenrohrelements 42 lässt sich vorzugsweise ein von der Feuerstätte, insbesondere ein in einem Brennraum 20 der Feuerstätte, im Betrieb erzeugtes Abgas abführen, während ein Zwischenraum zwischen dem Außenrohrelement 41 und dem Innenrohrelement 42 zur Führung der Zuluft vorgesehen ist. Das Doppelrohrsystem 40 ist dabei vorzugsweise dazu vorgesehen, Zuluft bzw. Abgas zwischen der Feuerstätte und einer den Hohlraum 18 des Korpus 3 zu einer Seite hin begrenzenden Zwischenplatte 26 zu führen. Vorzugsweise ist die Zwischenplatte 26 tragend ausgestaltet, so dass ein weiterer Korpus auf die Zwischenplatte 26 zur Ausbildung eines Schornsteins gesetzt werden kann. Um den vergleichsweise hohen Anforderungen die Dichtigkeit von Abgasanlagen von Feuerstätten 2, insbesondere gasbetriebenen Feuerstätten 2, zu genügen und eine einfache Montage des Doppelrohrsystems 40 zu ermöglichen, sind Anschlussvorrichtungen 1 für einen ersten Schnittstellenbereich 61 zwischen der Feuerstätte und dem Doppelrohrsystem 40 und/oder für einen zweiten Schnittstellenbereich 62 zwischen dem Doppelrohrsystem 40 und einem weiteren Rohrelement vorgesehen. Dabei ist die Anschlussvorrichtung 1 für den ersten Schnittstellenbereich 61 zwischen Doppelrohrsystem 40 und Feuerstätte im verbauten Zustand über, insbesondere unmittelbar über der Feuerstätte, angeordnet, während die Anschlussvorrichtung 1 für den zweiten Schnittstellenbereich 62 zwischen dem Doppelrohrsystem 40 und dem weiteren Rohrelement, vorzugsweise einem Keramik umfassenden weiteren Rohrelement, in die Zwischenplatte 26 integrierbar bzw. integriert ist.

Um eine optimale Erwärmung eines Raums, in den der Korpus 3 integriert ist, zu ermöglichen, weist der Korpus 3 vorzugsweise eine Zirkulationsöffnung 32 auf. Vorzugsweise umfasst der Korpus 3 eine weitere (nicht dargestellte) Zirkulationsöffnung), damit Luft durch die weitere Zirkulationsöffnung in den Hohlraum 18 des Korpus 3 eintreten und anschließend aus der Zirkulationsöffnung 32 wieder aus dem Hohlraum 18 austreten kann. Oberhalb der Zirkulationsöffnung 32 ist vorzugsweise ein Abstandhalteelement 38 vorgesehen, das sich quer über dem Hohlraum erstreckt und vorzugsweise parallel unterhalb der Zwischenplatte 26 verläuft. Das Abstandshalteelement 38 hat einerseits die Funktion, das Doppelrohrsystem 40 in einer im Wesentlichen quer zur Längserstreckung des Korpus 3 zu führen. Andererseits ist es Aufgabe des Abstandshalteelements 38, eine darüber befindliche Dämmung an ihrem Platz zu fixieren.

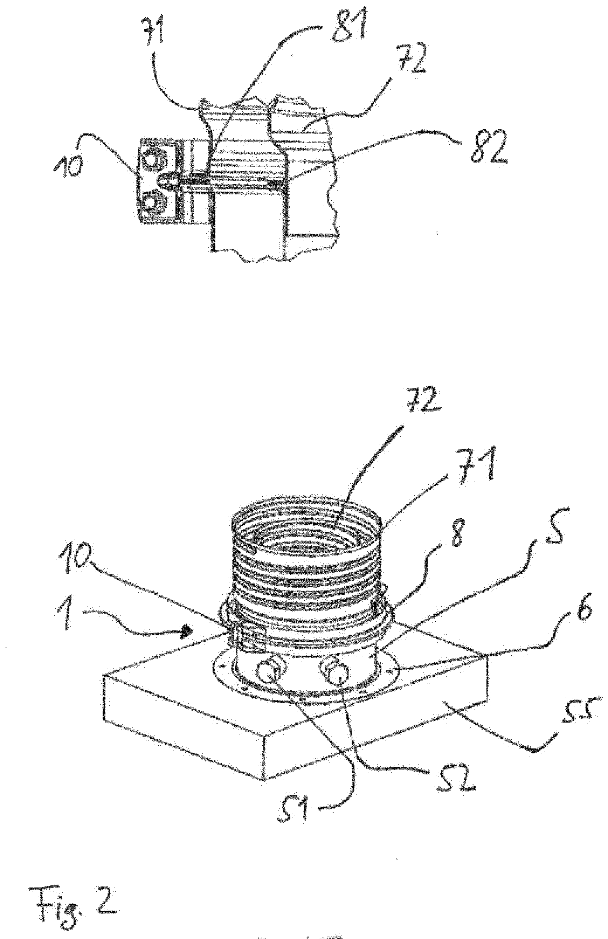

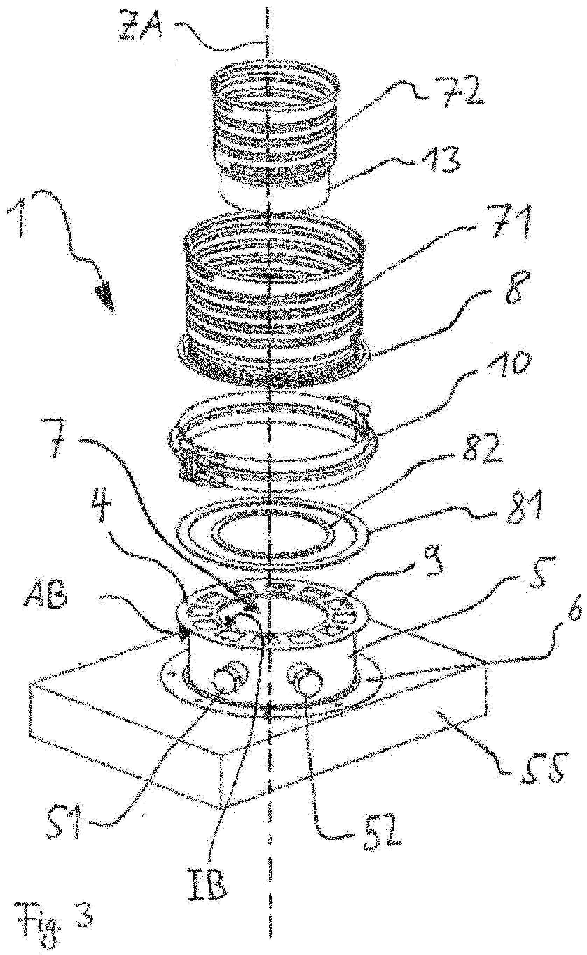

Die **Figuren 2** **und** **3** zeigen eine Anschlussvorrichtung 1 gemäß einer ersten bevorzugten Ausführungsform der vorliegenden Erfindung in einem zusammengesetzten Zustand (Figur 2) und in einer Explosionsdarstellung (Figur 3). Insbesondere handelt es sich bei der Anschlussvorrichtung 1 um eine solche, die für den ersten Schnittstellenbereich 61 zwischen der Feuerstätte und dem Doppelrohrsystem 40 vorgesehen ist. Dabei umfasst die Anschlussvorrichtung 1 einen Grundkörper 5, insbesondere einen zylinder- oder kreiszylinderförmigen Grundkörper, der beispielsweise feuerstättenseitig mittels eines Flanschs 6 unmittelbar an die Feuerstätte anbindbar ist oder an einen Anschlusskasten 55 der Feuerstätte anbindbar ist. Der Grundkörper 5 schließt auf seiner der Feuerstätte abgewandten Seite insbesondere mit einem Scheibenelement 4 ab. Vorzugsweise steht das Scheibenelement 4 von dem der Feuerstätte angewandten Rand des zylinderförmigen Grundkörpers 5, insbesondere im Wesentlichen senkrecht ab und ist kragen- bzw. bordürenförmig oder ringscheibenförmig ausgeformt. Hierbei stellt das Scheibenelement 4 einen Innenkantenbereich IB und einen Außenkantenbereich AB bereit, wobei der Innenkantenbereich IB näher an einer dem zylinderförmigen Grundkörper 5 zugeordneten Zentralachse ZA angeordnet ist als der Außenkantenbereich AB. Der Innenkantenbereich IB und der Außenkantenbereich AB sind vorzugsweise dadurch festgelegt, dass zwischen dem Innenkantenbereich IB und dem Außenkantenbereich AB eine oder mehrere Aussparungen 9 vorgesehen sind. Auf der dem Grundkörper 5 gegenüberliegenden Seite des Scheibenelements 4 ist es vorgesehen, dass sich ein erstes Hülsenelement 71 und ein zweites Hülsenelement 72 anbinden lassen. Das erste Hülsenelement 71 umfasst hierbei ein Gewinde und ist derart ausgestaltet, dass es sich beispielsweise über das Gewinde mit dem Außenrohrelement 41 verschrauben lässt, während das zweite Hülsenelement 72 ebenfalls ein Gewinde umfasst und derart ausgestaltet ist, dass sich das zweite Hülsenelement 72 über das Gewinde mit dem Innenrohrelement 42 verschrauben lässt. Weiterhin ist es vorgesehen, dass das zweite Hülsenelement 72 derart ausgestaltet ist, dass es im montierten Zustand in einen vom Scheibenelement 4 durch den Innenkantenbereich IB begrenzten Aufnahmebereich 7 und dabei vorzugsweise in eine Abgasöffnung 80 der Feuerstätte eingreift. Vorzugsweise lässt sich das zweite Hülsenelement 72 in den durch den Innenkantenbereich IB begrenzten Aufnahmebereich 7 entlang einer parallel zur Zentralachse ZA verlaufenden Richtung zumindest bereichsweise einschieben. Beispielsweise ist das zweite Hülsenelement 72 derart ausgestaltet, dass es sich bereichsweise in den Aufnahmebereich 7 einschieben lässt bis es gegen den Innenkantenbereich IB des Scheibenelements 4 anschlägt. Beispielsweise umfasst das zweite Hülsenelement 72 hierfür einen radial vorstehenden Vorsprung. Mittels des Scheibenelements 4 lässt sich demnach auf einfache Weise das zweite Hülsenelement 72 innerhalb der Anschlussvorrichtung 1 positionieren bzw. stabilisieren. Weiterhin ist es vorgesehen, dass das zweite Hülsenelement 72 in einem montierten Zustand zwischen der Feuerstätte und dem Scheibenelement 4 einen gewindefreien Abschnitt 13 aufweist.

Weiterhin ist es vorgesehen, dass das erste Hülsenelement 71 scheibenelementseitig einen Flansch 6 aufweist, über den das erste Hülsenelement 71 an den Außenkantenbereich AB des Scheibenelements 4 anbindbar ist. Zur Anbindung ist hierbei vorzugsweise ein Spannelement 10, bspw. ein Spannring bzw. Klemm bz. Rohrschelle, vorzugesehen. Vorzugsweise umfasst das Spannelement 10 einen Teilbereich, insbesondere einen U-förmigen Teilbereich, der im verbauten Zustand das Scheibenelement 10 und den Flansch 8 des ersten Hülsenelements 71 aufnimmt. Gegenüber der Zentralachse ZA ist der U-förmige Teilbereich radial ausgerichtet, wobei der offene Bereich des U-förmigen Teilbereichs der Zentralachse ZA zugewandt ist. Mittels des Spannelements 10 und des Scheibenelements 4 lassen sich das erste Hülsenelement 71 und das zweite Hülsenelement 72 bei der Montage auf einfache Weise positionieren und fixieren.

Um eine ausreichende Abdichtung zu realisieren ist es vorzugsweise vorgesehen, dass ein erstes Dichtelement 81 zur Anordnung zwischen dem ersten Hülsenelement 71 und dem Außenkantenbereich AB und/oder ein zweites Dichtelement 82 zur Anordnung zwischen dem zweiten Hülsenelement 72 und dem Innenkantenbereich IB vorgesehen ist. Dabei werden das erste Dichtelement 81 und das zweite Dichtelement 82 vorzugsweise beim Verspannen des Spannelements 10 jeweils verklemmt, so dass sich die gewünschte Abdichtung erzielen lässt. Beispielsweise sind das erste Dichtelement 81 und das zweite Dichtelement 82 als Flachdichtungen ausgestaltet.

Weiterhin ist es vorgesehen, dass eine erste Messvorrichtung 51 und eine zweite Messvorrichtung 52 in den Grundkörper 5 integriert sind, wobei die Messvorrichtungen 51, 52 vorzugsweise im montierten Zustand durch den Grundkörper 5 und das zweite Hülsenelement 72 durchgreifen, um das Abgas innerhalb des Innenrohrelements 42 bzw. des zweiten Hülsenelements 72 zu untersuchen.

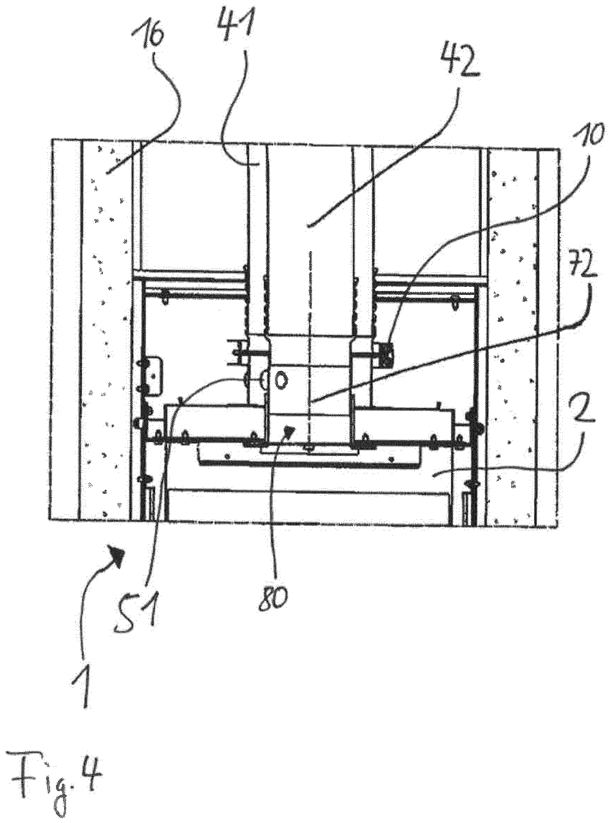

Bei der Montage lässt sich somit zunächst das zweite Hülsenelement 72 an dem Innenrohrelement 42 und das erste Hülsenelement 71 an dem Außenrohrelement 41 anschließen. Über die Gewinde an dem ersten Hülsenelement 71 und dem zweiten Hülsenelement 72 lassen etwaige Überlängen des Innenrohrelements 42 oder des Außenrohrelements 41 in vorteilhafter Weise kompensieren. Nach dem Anschluss des ersten Hülsenelements 71 an das Außenrohrelement 41 und dem Anschluss des zweiten Hülsenelements 72 an das Innenrohrelement 42, wird das zweite Hülsenelement 72 in den vom Scheibenelement 4 bereitgestellten Aufnahmebereich 7 zumindest teilweise eingeschoben. Dabei wird das zweite Hülsenelement 72 soweit eingeschoben bis eine gasfluide Verbindung zwischen dem zweiten Hülsenelement 72 und der Abgasöffnung 80 der Feuerstätte gebildet ist. Anschließend wird das erste Hülsenelement 71 mit seinem Flansch 8 auf den Außenkantenbereich AB aufgesetzt und mit dem Scheibenelement 4 verschraubt. Die **Figur 4** zeigt die Anschlussvorrichtung 1 gemäß der ersten bevorzugten Ausführungsform der vorliegenden Erfindung in einem verbauten Zustand. Insbesondere umfasst die Feuerstätte eine zylinderförmige Abgasöffnung 80, in die das zweite Hülsenelement 72 eingesteckt ist.

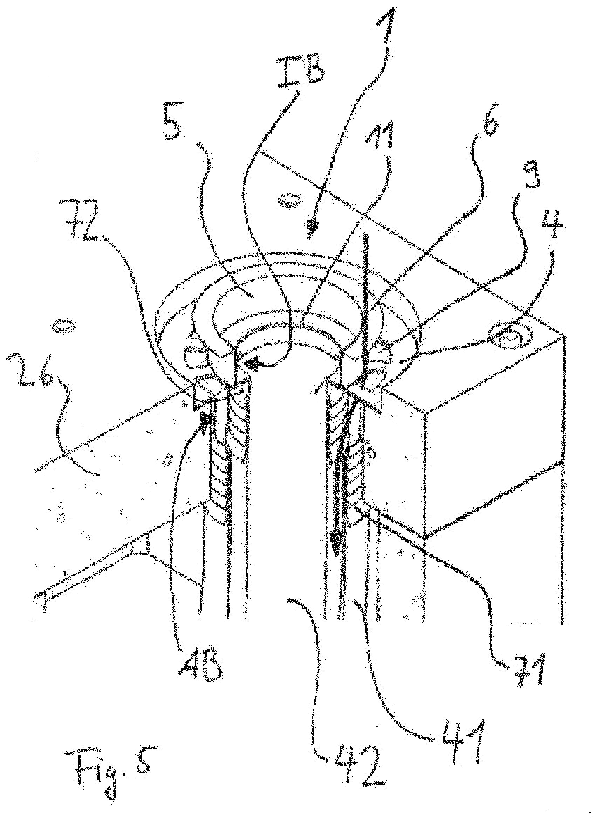

In **Figur 5** ist eine Anschlussvorrichtung 1 gemäß einer zweiten bevorzugten Ausführungsform der vorliegenden Erfindung dargestellt. Insbesondere handelt es sich bei der Anschlussvorrichtung 1 um eine solche die für den zweiten Schnittstellenbereich 62 zwischen dem Doppelrohrsystem 40 und einem weiteren Rohrelement vorgesehen ist. Dabei ist die Anschlussvorrichtung 1 in eine Zwischenplatte 26 integriert. Hierbei liegt das Scheibenelement 4 auf einem Absatz innerhalb der Zwischenplatte 26 auf und bildet im Innenkantenbereich IB eine Auflagefläche 11 aus. Diese Auflagefläche 11 dient insbesondere zum Abstützen eines weiteren Rohrs eines zweiten Korpus, der auf die Zwischenplatte 26 montiert wird. Insbesondere ist es hierbei vorgesehen, dass der Grundkörper 5 die Auflagefläche 11 radial begrenzt und zur Führung bzw. als seitliche Stütze für das weitere Rohrelement dient. Weiterhin ist es vorgesehen, dass der Flansch 6 am Grundkörper 5 bündig mit einer Oberseite der Zwischenplatte 26 abschließt. Insbesondere ist es vorgesehen, dass im montierten Zustand das weitere Rohr innerhalb des Grundkörpers 5 angeordnet ist und eine das weitere Rohr zumindest teilweise ummantelnde Isolierungshülle auf dem Flansch 6 aufsetzt. Dadurch lässt sich eine bauraumsparende Anschlussvorrichtung 1 bereitstellen, die in der Zwischenplatte 26 vollständig versenkt ist. Ferner ist es vorstellbar, dass das erste Hülsenelement 71 mittelbar, vorzugsweise über die Zwischenplatte 26, mit dem Außenkantenbereich AB verbunden ist. Der Außenkantenbereich AB bezeichnet vorzugsweise einen außenliegenden Ringabschnitt, der keine Aussparungen, die zur Luftleitung vorgesehen sind, umfasst und der im montierten Zustand auf dem Absatz in der Zwischenplatte 26 aufliegt.

Vorstellbar ist, auch dass die beschriebenen Anschlussvorrichtungen 1 ebenfalls verwendet werden, wenn ein zusätzlicher (nebenliegender) Zuluftschacht vorgesehen ist. Zudem gestatten die Anschlussvorrichtungen 1 einen flexiblen Übergang zu anderen Brennräumen 20 im Nachgang.

### Bezugszeichen:

- 1: Anschlussvorrichtung
- 2: Brennraumtür
- 3: Korpus
- 4: Scheibenelement
- 5: Grundkörper
- 6: Flansch des Grundkörpers
- 7: Aufnahmebereich
- 8: Flansch des ersten Hülsenelements
- 9: Aussparung
- 10: Spannelement
- 11: Auflagefläche
- 13: gewindefreier Abschnitt
- 16: vordere Wandfläche
- 17: Seitenwand
- 18: Hohlraum
- 20: Brennraum
- 26: Zwischenplatte
- 32: Zirkulationsöffnung
- 38: Abstandshalteelement
- 40: Doppelrohrsystem
- 41: Außenrohrelement
- 42: Innenrohrelement
- 51: erste Messvorrichtung
- 52: zweite Messvorrichtung
- 55: Anschlusskasten
- 61: erster Schnittstellenbereich
- 62: zweiter Schnittstellenbereich
- 71: erstes Hülsenelement
- 72: zweites Hülsenelement
- 80: Abgasöffnung
- 81: erstes Dichtelement
- 82: zweites Dichtelement
- IB: Innenkantenbereich
- AB: Außenkantenbereich
- ZA: Zentralachse

## Patentansprüche

1. Feuerstätte (2) umfassend eine Anschlussvorrichtung (1) für ein Doppelrohrsystem (40), das ein Außenrohrelement (41) und ein innerhalb des Außenrohrelements (41) angeordnetes Innenrohrelement (42) aufweist für einen ersten Schnittstellenbereich (61) zwischen der Feuerstätte (2) und dem Doppelrohrsystem (40) oder einen zweiten Schnittstellenbereich (62) zwischen dem Doppelrohrsystem (40) und einem weiteren Rohrelement, umfassend:
- einen Grundkörper (5),
- ein an den Grundkörper (5) angrenzendes Scheibenelement (4)
- einen vom Scheibenelement (4) bereitgestellten Innenkantenbereich (IB) und
- einen vom Scheibenelement (4) bereitgestellten Außenkantenbereich (AB), wobei zwischen dem Innenkantenbereich (IB) und dem Außenkantenbereich (AB) eine oder mehrere Aussparungen (9) angeordnet sind,
wobei
-- der Außenkantenbereich (AB) zur Anbindung eines ersten Hülsenelements (71), das Bestandteil der Anschlussvorrichtung ist und das an das Außenrohrelement (41) anbindbar ist, und
-- der Innenkantenbereich (IB) zur Anbindung eines zweiten Hülsenelements (72), das Bestandteil der Anschlussvorrichtung ist und das an das Innenrohrelement (42) anbindbar ist,
vorgesehen ist, wobei die Anschlussvorrichtung (1) eine Spannvorrichtung (10) zum Fixieren des ersten Hülsenelements (71) an dem Scheibenelement (4) umfasst.

2. Feuerstätte (2) gemäß Anspruch 1, wobei die Anschlussvorrichtung (1) den ersten Schnittstellenbereich (61) zwischen der Feuerstätte (2) und dem Doppelrohrsystem (40) oder den zweiten Schnittstellenbereich (62) zwischen dem Doppelrohrsystem (40) und dem weiteren Rohrelement, vorzugsweise einem Keramik umfassenden weiteren Rohr, bis zu einem Druck von 80 Pa und bevorzugt bis zu einem Druck von 100 Pa, abdichtet.

3. Feuerstätte (2) gemäß Anspruch 1 oder 2, wobei das Scheibenelement (4) einen Kragen an einem zylinderförmigen Grundkörper (5) ausbildet.

4. Feuerstätte (2) gemäß einem der vorhergehenden Ansprüche, wobei der Innenkantenbereich (IB) konzentrisch zum Außenkantenbereich (AB) verläuft.

5. Feuerstätte (2) gemäß einem der vorhergehenden Ansprüche, wobei die Aussparungen (9) gitterförmig ausgestaltet sind.

6. Feuerstätte (2) gemäß einem der vorhergehenden Ansprüche, wobei das Scheibenelement (4) im Innenkantenbereich (IB) eine Auflagefläche (11) zum Anschluss des weiteren Rohrelements, insbesondere eines Keramikrohrs, umfasst.

7. Feuerstätte (2) gemäß einem der vorhergehenden Ansprüche, wobei als Spannvorrichtung (10) ein Spannring vorgesehen ist.

8. Feuerstätte (2) gemäß einem der vorhergehenden Ansprüche, wobei ein erstes Dichtelement (81) zur Anordnung zwischen dem ersten Hülsenelement (71) und dem Außenkantenbereich (AB) und/oder ein zweites Dichtelement (82) zur Anordnung zwischen dem zweiten Hülsenelement (72) und dem Innenkantenbereich (IB) vorgesehen ist.

9. Feuerstätte (2) gemäß einem der vorhergehenden Ansprüche, wobei das erste Hülsenelement (71) und/oder das zweite Hülsenelement (72) zumindest bereichsweise ein Gewinde zur jeweiligen Anbindung des Außenrohrelements (41) und/oder des Innenrohrelements (42) aufweist.

10. Feuerstätte (2) gemäß einem der vorhergehenden Ansprüche, wobei das zweite Hülsenelement (72) derart ausgestaltet ist, dass das zweite Hülsenelement (72) im montierten Zustand durch den Grundkörper (5) zur Anbindung an eine Abgasöffnung (80) in der Feuerstätte (2), insbesondere zum Einstecken in eine Abgasöffnung (80) in der Feuerstätte (2), eingreift oder hindurchgreift.

11. Feuerstätte (2) gemäß einem der vorhergehenden Ansprüche, wobei der Grundkörper (5) auf der dem Scheibenelement (4) gegenüberliegenden Seite einen Flansch (6) zur Anbindung an die Feuerstätte (2) oder an einen Anschlusskasten (55) der Feuerstätte (2) aufweist.

12. Feuerstätte (2) gemäß einem der vorhergehenden Ansprüche, wobei eine Messvorrichtung (51, 52) in den Grundkörper (5) integriert ist oder der Grundkörper (5) einen Anschlussberiech für eine Messeinrichtung (51, 52) aufweist, wobei die Messvorrichtung (51, 52) vorzugsweise im montierten Zustand durch den Grundköper (5) und das zweite Hülsenelement (72) durchgreift.

13. Feuerstätte (2) gemäß einem der vorhergehenden Ansprüche umfassend eine Zwischenplatte (26).

14. Feuerstätte (2) gemäß einem der Ansprüche 1 bis 12, umfassend ein Doppelrohrsystem (40).

15. Verfahren zum Verbinden eines Doppelrohrsystem (40), das ein Außenrohrelement (41) und ein innerhalb des Außenrohrelements (41) angeordnetes Innenrohrelement (42) aufweist, mit einer Feuerstätte (2) mittels einer Anschlussvorrichtung (1), die einen zylinderförmiger Grundkörper (5) und ein an den zylinderförmigen Grundkörper (5) angrenzendes Scheibenelement (4) umfasst, wobei das Scheibenelement (4) einen Innenkantenbereich (IB) und einen Außenkantenbereich (AB) bereitstellt, wobei zwischen dem Innenkantenbereich (IB) und dem Außenkantenbereich (AB) eine oder mehrere Aussparungen (9) angeordnet sind, wobei der Außenkantenbereich (AB) zur Anbindung eines ersten Hülsenelements (71), das an das Außenrohrelement (41) anbindbar ist, und der Innenkantenbereich (IB) zur Anbindung eines zweiten Hülsenelements (72), das an das Innenrohrelement (42) anbindbar ist, vorgesehen ist, umfassend die Schritte:
Anbinden des ersten Hülsenelements (71) an das Außenrohrelement (41),
Anbinden des zweiten Hülsenelements (72) an das Innenrohrelement (42),
Verbinden des ersten Hülsenelements (71) mit dem Außenkantenbereich (AB) des Scheibenelements (4) und
Verbinden des zweiten Hülsenelements (72) mit dem Innenkantenbereich (IB), wobei das erste Hülsenelement mit einer Spannvorrichtung der Anschlussvorrichtung (1) an dem Scheibenelement (4) fixiert wird.

## Claims

1. A fireplace (2) comprising a connecting device (1) for a double pipe system (40), which has an outer pipe element (41) and an inner pipe element (42) arranged inside the outer pipe element (41), for a first interface region (61) between the fireplace (2) and the double pipe system (40) or a second interface region (62) between the double pipe system (40) and a further pipe element, comprising:
- a base body (5),
- a disc element (4) adjacent to the base body (5)
- an inner edge area (IB) provided by the disc element (4) and
- an outer edge area (AB) provided by the disc element (4),
wherein one or more recesses (9) are arranged between the inner edge area (IB) and the outer edge area (AB),
wherein
-- the outer edge area (AB) for connecting a first sleeve element (71), which is part of the connecting device and which is connectable to the outer pipe element (41), and
-- the inner edge area (IB) for connecting a second sleeve element (72) which is part of the connecting device and which is connectable to the inner pipe element (42),
is provided, wherein the connecting device (1) comprises a clamping device (10) for fixing the first sleeve element (71) to the disc element (4).

2. The fireplace (2) according to claim 1, wherein the connecting device (1) seals the first interface region (61) between the fireplace (2) and the double pipe system (40) or the second interface region (62) between the double pipe system (40) and the further pipe element, preferably a further pipe comprising ceramic, up to a pressure of 80 Pa and preferably up to a pressure of 100 Pa.

3. The fireplace (2) according to claim 1 or 2, wherein the disc element (4) forms a collar on a cylindrical base body (5).

4. The fireplace (2) according to any one of the preceding claims, wherein the inner edge area (IB) is concentric with the outer edge area (AB).

5. The fireplace (2) according to any one of the preceding claims, wherein the recesses (9) are formed in a grid-like manner.

6. The fireplace (2) according to any one of the preceding claims, wherein the disc element (4) in the inner edge area (IB) comprises a support surface (11) for connecting the further pipe element, in particular a ceramic pipe.

7. The fireplace (2) according to any one of the preceding claims, wherein a clamping ring is provided as a clamping device (10).

8. The fireplace (2) according to any one of the preceding claims, wherein a first sealing element (81) is provided for arrangement between the first sleeve element (71) and the outer edge area (AB) and/or a second sealing element (82) is provided for arrangement between the second sleeve element (72) and the inner edge area (IB).

9. The fireplace (2) according to any one of the preceding claims, wherein the first sleeve element (71) and/or the second sleeve element (72) has a thread, at least in regions, for the respective connection of the outer pipe element (41) and/or the inner pipe element (42).

10. The fireplace (2) according to any one of the preceding claims, wherein the second sleeve element (72) is designed in such a way that the second sleeve element (72) engages or passes through the base body (5) in the assembled state for connection to an exhaust gas opening (80) in the fireplace (2), in particular for insertion into an exhaust gas opening (80) in the fireplace (2).

11. The fireplace (2) according to any one of the preceding claims, wherein the base body (5) has a flange (6) on the side opposite the disc element (4) for connection to the fireplace (2) or to a connection box (55) of the fireplace (2).

12. The fireplace (2) according to any one of the preceding claims, wherein a measuring device (51, 52) is integrated into the base body (5) or the base body (5) has a connecting region for a measuring device (51, 52), wherein the measuring device (51, 52) preferably in the mounted state passes through the base body (5) and the second sleeve element (72).

13. A fireplace (2) according to any one of the preceding claims comprising an intermediate plate (26).

14. A fireplace (2) according to one of claims 1 to 12, comprising a double pipe system (40).

15. A method for connecting a double pipe system (40), comprising an outer pipe element (41) and an inner pipe element (42) arranged inside the outer pipe element (41), to a fireplace (2) by means of a connecting device (1) which comprises a cylindrical base body (5) and a disc element (4) adjoining the cylindrical base body (5), wherein the disc element (4) provides an inner edge area (IB) and an outer edge area (AB), wherein one or more recesses (9) are arranged between the inner edge area (IB) and the outer edge area (AB), the outer edge area (AB) being provided for connecting a first sleeve element (71), which can be connected to the outer pipe element (41), and the inner edge area (IB) being provided for connecting a second sleeve element (72), which can be connected to the inner pipe element (42), comprising the steps:
connecting the first sleeve element (71) to the outer pipe element (41),
connecting the second sleeve element (72) to the inner pipe element (42),
connecting the first sleeve element (71) to the outer edge area (AB) of the disc element (4), and
connecting the second sleeve element (72) to the inner edge area (IB),
wherein the first sleeve element is fixed to the disc element (4) with a clamping device of the connecting device.

## Revendications

1. Foyer (2) comprenant
un dispositif de connexion (1) pour un système à double tube (40), qui présente un élément tubulaire extérieur (41) et un élément tubulaire intérieur (42) disposé à l'intérieur de l'élément tubulaire extérieur (41) pour une première zone d'interface (61) entre le foyer (2) et le système à double tube (40) ou une deuxième zone d'interface (62) entre le système à double tube (40) et un autre élément tubulaire, comprenant :
- un corps de base (5),
- un élément de disque (4) adjacent au corps de base (5),
- une zone de bord intérieur (IB) assurée par l'élément de disque (4), et
- une zone de bord extérieur (AB) assurée par l'élément de disque (4),
une ou plusieurs échancrures (9) étant disposées entre la zone de bord intérieur (IB) et la zone de bord extérieur (AB),
dans lequel
-- la zone de bord extérieur (AB) est prévue pour le raccordement d'un premier élément de manchon (71) qui fait partie du dispositif de raccordement et qui peut être raccordé sur l'élément tubulaire extérieur (41), et
-- la zone de bord intérieur (IB) est prévue pour le raccordement d'un deuxième élément de manchon (72) qui fait partie du dispositif de raccordement et peut être raccordé sur l'élément tubulaire intérieur (42),
le dispositif de connexion (1) comprenant un dispositif de serrage (10) pour fixer le premier élément de manchon (71) à l'élément de disque (4).

2. Foyer (2) selon la revendication 1, dans lequel
le dispositif de connexion (1) étanche la première zone d'interface (61) entre le foyer (2) et le système à double tube (40) ou la deuxième zone d'interface (62) entre le système à double tube (40) et l'autre élément tubulaire, de préférence un autre tube comprenant une céramique, jusqu'à une pression de 80 Pa et de préférence jusqu'à une pression de 100 Pa.

3. Foyer (2) selon la revendication 1 ou 2, dans lequel
l'élément de disque (4) forme une collerette sur un corps de base cylindrique (5).

4. Foyer (2) selon l'une des revendications précédentes, dans lequel
la zone de bord intérieur (IB) est concentrique à la zone de bord extérieur (AB).

5. Foyer (2) selon l'une des revendications précédentes, dans lequel
les échancrures (9) sont réalisées en forme de grille.

6. Foyer (2) selon l'une des revendications précédentes, dans lequel
l'élément de disque (4) présente dans la zone de bord intérieur (IB) une surface d'appui (11) pour la connexion de l'autre élément tubulaire, en particulier d'un tube en céramique.

7. Foyer (2) selon l'une des revendications précédentes, dans lequel
une bague de serrage est prévue en tant que dispositif de serrage (10).

8. Foyer (2) selon l'une des revendications précédentes, dans lequel
un premier élément d'étanchéité (81) est prévu pour être disposé entre le premier élément de manchon (71) et la zone de bord extérieur (AB) et/ou un deuxième élément d'étanchéité (82) est prévu pour être disposé entre le deuxième élément de manchon (72) et la zone de bord intérieur (IB).

9. Foyer (2) selon l'une des revendications précédentes, dans lequel
le premier élément de manchon (71) et/ou le deuxième élément de manchon (72) présente(nt) au moins localement un pas de vis pour le raccordement respectif de l'élément tubulaire extérieur (41) et/ou de l'élément tubulaire intérieur (42).

10. Foyer (2) selon l'une des revendications précédentes, dans lequel
le deuxième élément de manchon (72) est conçu de telle sorte que le deuxième élément de manchon (72) s'engage ou traverse le corps de base (5) à l'état monté pour le raccordement à une ouverture d'évacuation de gaz (80) située dans le foyer (2), en particulier pour l'enfichage dans une ouverture d'évacuation de gaz (80) située dans le foyer (2).

11. Foyer (2) selon l'une des revendications précédentes, dans lequel
le corps de base (5) présente une bride (6) sur le côté opposé à l'élément de disque (4) pour le raccordement au foyer (2) ou à une boîte de raccordement (55) du foyer (2).

12. Foyer (2) selon l'une des revendications précédentes, dans lequel
un dispositif de mesure (51, 52) est intégré dans le corps de base (5) ou le corps de base (5) présente une zone de connexion pour un dispositif de mesure (51, 52), le dispositif de mesure (51, 52) traversant de préférence à l'état monté le corps de base (5) et le deuxième élément de manchon (72).

13. Foyer (2) selon l'une des revendications précédentes, comprenant une plaque intermédiaire (26).

14. Foyer (2) selon l'une des revendications 1 à 12, comprenant un système à double tube (40).

15. Procédé de liaison d'un système à double tube (40), pourvu d'un élément tubulaire extérieur (41) et d'un élément tubulaire intérieur (42) disposé à l'intérieur de l'élément tubulaire extérieur (41), à un foyer (2) au moyen d'un dispositif de connexion (1) qui comprend un corps de base cylindrique (5) et un élément de disque (4) adjacent au corps de base cylindrique (5), dans lequel
l'élément de disque (4) assure une zone de bord intérieur (IB) et une zone de bord extérieur (AB),
une ou plusieurs échancrures (9) sont disposées entre la zone de bord intérieur (IB) et la zone de bord extérieur (AB),
la zone de bord extérieur (AB) est prévue pour le raccordement d'un premier élément de manchon (71) qui peut être raccordé à l'élément tubulaire extérieur (41) et la zone de bord intérieur (IB) est prévue pour le raccordement d'un deuxième élément de manchon (72) qui peut être raccordé à l'élément tubulaire intérieur (71),
comprenant les étapes consistant à :
raccorder le premier élément de manchon (71) à l'élément tubulaire extérieur (41),
raccorder le deuxième élément de manchon (72) à l'élément tubulaire intérieur (42),
relier le premier élément de manchon (71) à la zone de bord extérieur (AB) de l'élément de disque (4) et
relier le deuxième élément de manchon (72) à la zone de bord intérieur (IB),
le premier élément de manchon étant fixé à l'élément de disque (4) par l'intermédiaire d'un dispositif de serrage du dispositif de connexion (1).
